# EUROPÄISCHE PATENTSCHRIFT

(11) **EP 3 715 594 B1**
(45) Veröffentlichungstag und Bekanntmachung des Hinweises auf die Patenterteilung: **27.10.2021**
(21) Anmeldenummer: 19166327.7
(22) Anmeldetag: 29.03.2019
(51) Int. Cl.: F01L 9/10

(54) **VENTILTRIEB MIT HYDRAULISCHEM VERZÖGERUNGSELEMENT FÜR EINEN VERBRENNUNGSMOTOR**
VALVE DRIVE WITH HYDRAULIC DELAY ELEMENT FOR A COMBUSTION ENGINE
COMMANDE DE SOUPAPE POURVUE D'ÉLÉMENT RETARDEUR HYDRAULIQUE POUR UN MOTEUR À COMBUSTION INTERNE

(43) Veröffentlichungstag der Anmeldung: 30.09.2020
(73) Patentinhaber: ABB Schweiz AG, 5400 Baden (CH)
(72) Erfinder: Mathey, Christoph, 5442 Fislisbach (CH); Ryser, Raphael, 5400 Baden (CH); Strebel, Andreas, 5423 Freienwil (CH)
(74) Vertreter: Zimmermann & Partner Patentanwälte mbB

(56) Entgegenhaltungen:
- DE-A1-102016 112 447
- JP-A- 2014 025 424
- US-A- 5 002 022
- US-A1- 2003 116 124
- US-A1- 2016 215 661
- US-A1- 2017 009 618
- US-A1- 2019 048 762

## Beschreibung

### Technisches Gebiet

Die Erfindung betrifft einen Ventiltrieb für einen Gasaustausch in einem Verbrennungsmotor und einen Verbrennungsmotor.

### Hintergrund

Verbrennungsmotoren, insbesondere Großmotoren, im mittelschnelllaufenden Segment werden heute vermehrt mit sogenannten Miller-Steuerzeiten und hocheffizienter Hochdruckaufladung ausgestattet. Die Steuerzeiten sind dadurch charakterisiert, dass der Einlassschluss vor dem unteren Totpunkt stattfindet. Diese Ausführung führt einerseits dazu, dass der Verbrauch sinkt und durch die interne Expansion der NOx-Ausstoß beträchtlich gemindert wird; jedoch andererseits das Start-, Beschleunigungs- und Teillastbetriebsverhalten negativ beeinflusst werden.

Bedingt durch extreme Miller-Steuerzeiten gelangt etwa bei Leerlauf nur so wenig Masse in den Zylinder, so dass bei einem Dieselmotor in der Kompressionsphase die benötigte Zündtemperatur nicht erreicht wird und somit ein Starten des Motors nicht möglich ist. Darüber hinaus ist die Füllung in einem großen Bereich des Teillastbetriebes so gering, so dass eine rauchfreie Verbrennung bei vertretbaren Abgastemperaturen nicht gewährleistet werden kann.

Bei Gasmotoren mit Miller-Steuerzeiten wirkt sich die niedrige Temperatur am Ende der Kompressionsphase negativ auf die Zündfähigkeit und damit auf das Laufverhalten des Motors aus. Generell kann durch Miller-Steuerzeiten das Beschleunigungs- bzw. Ansprechverhalten negativ beeinflusst werden. Zusätzlich kann es bei Leerlauf und im Niedriglastbetrieb zu Betriebszuständen kommen, bei denen sich ein unerwünschtes negatives Druckgefälle zwischen dem Raum oberhalb und unterhalb des Kolbens einstellt.

Als Gegenmaßnahme zu dem teilweise unbefriedigenden Betriebsverhalten von Verbrennungsmotoren mit Miller-Steuerzeiten bei tiefen Lasten kommen heute verschiedene Technologien zum Einsatz. Einige dieser Technologien zielen beispielsweise darauf ab, den Einlassschluss im Teillastbetrieb zu verändern.
Das Dokument US2019/048762 A1 offenbart einen Ventiltrieb, mit welchem eine Brennkraftmaschine im Millerbetrieb betrieben werden kann. Die Dokumente US 5 002 022 A, US 2003/116124 A1 und US 2017/009618 A1 offenbaren Ventilriebmechanismen, bei denen die Ventilöffnungs- und schließzeiten geändert werden können.

Angesichts des vorstehend Erwähnten besteht Bedarf an weiteren Verbesserungen.

### Zusammenfassung der Erfindung

Diese Aufgabe wird zumindest teilweise gelöst durch ein Ventiltrieb gemäß Anspruch 1. Ferner, wird die Aufgabe durch einen Verbrennungsmotor gemäß Anspruch 15 gelöst. Weitere Ausführungsformen, Modifikationen und Verbesserungen ergeben sich anhand der folgenden Beschreibung und der beigefügten Ansprüche.

Gemäß einer Ausführungsform wird ein Ventiltrieb für einen Verbrennungsmotor bereitgestellt. Der Ventiltrieb weist einen Einlassventil-Betätigungsmechanismus zur periodischen Betätigung eines Einlassventils des Verbrennungsmotors auf. Weiterhin weist der Ventiltrieb ein mit dem Einlassventil-Betätigungsmechanismus in Kontakt befindliches Verzögerungselement mit einer Hydraulikkammer zum Verzögern einer Schließbewegung des Einlassventils mittels eines Hydraulikmediums auf. Ferner weist der Ventiltrieb eine Hydraulik-Zufuhr zum Zuführen des Hydraulikmediums in die Hydraulikkammer auf. Die Hydraulik-Zufuhr weist eine Steuerwelle auf, wobei die Steuerwelle von dem Verbrennungsmotor mechanisch angetrieben wird. Bevorzugt wird die Steuerwelle synchron zu der periodischen Betätigung des Einlassventils angetrieben. Weiterhin weist die Steuerwelle einen axial ausgedehnten Hohlraum für das Hydraulikmedium, und mindestens eine Öffnung zum intermittierenden Zuführen des Hydraulikmediums von dem Hohlraum hin zu der Hydraulikkammer auf.

Gemäß einer Ausführungsform wird ein Verbrennungsmotor bereitgestellt. Der Verbrennungsmotor weist zumindest einen Ventiltrieb nach einem der hierin offenbarten Ausführungsformen auf.

Ausführungsformen der Erfindung können insbesondere eine gezielte Ansteuerung des Verzögerungselements mit geringem konstruktivem und steuerungsmäßigem Aufwand ermöglichen. Dadurch lässt sich auf einfache und kostengünstige Weise eine Verbesserung des Teillastverhaltens bei Verbrennungsmotoren erzielen. Daher sind Ausführungsformen der Erfindung besonders für Verbrennungsmotoren mit Miller-Steuerzeiten und/oder hohen Anforderungen an den Betriebsbereich verwendbar.

### Kurze Beschreibung der Figuren

Nachfolgend wird die Erfindung anhand von Ausführungsformen näher erläutert, ohne dass diese den durch die Ansprüche definierten Schutzbereich einschränken sollen.

Die beiliegenden Zeichnungen veranschaulichen Ausführungsformen und dienen zusammen mit der Beschreibung der Erläuterung der Prinzipien der Erfindung. Die Elemente der Zeichnungen sind relativ zueinander und nicht notwendigerweise maßstabsgetreu. Gleiche Bezugszeichen bezeichnen entsprechend ähnliche Teile.

### Die Figuren zeigen:

Figur 1A zeigt eine Seitenansicht einer erfindungsgemäßen Steuerwelle gemäß einer Ausführungsform.
Figur 1B zeigt eine Querschnittsansicht der Steuerwelle aus Figur 1A entlang der Linie B-B.
Figur 2 zeigt einen erfindungsgemäßen Ventiltrieb gemäß einer Ausführungsform.
Figur 3 zeigt einen erfindungsgemäßen Ventiltrieb gemäß einer weiteren Ausführungsform.
Figur 4 zeigt einen erfindungsgemäßen Ventiltrieb gemäß einer weiteren Ausführungsform.
Figur 5 zeigt einen erfindungsgemäßen Ventiltrieb gemäß einer weiteren Ausführungsform.

### Ausführliche Beschreibung

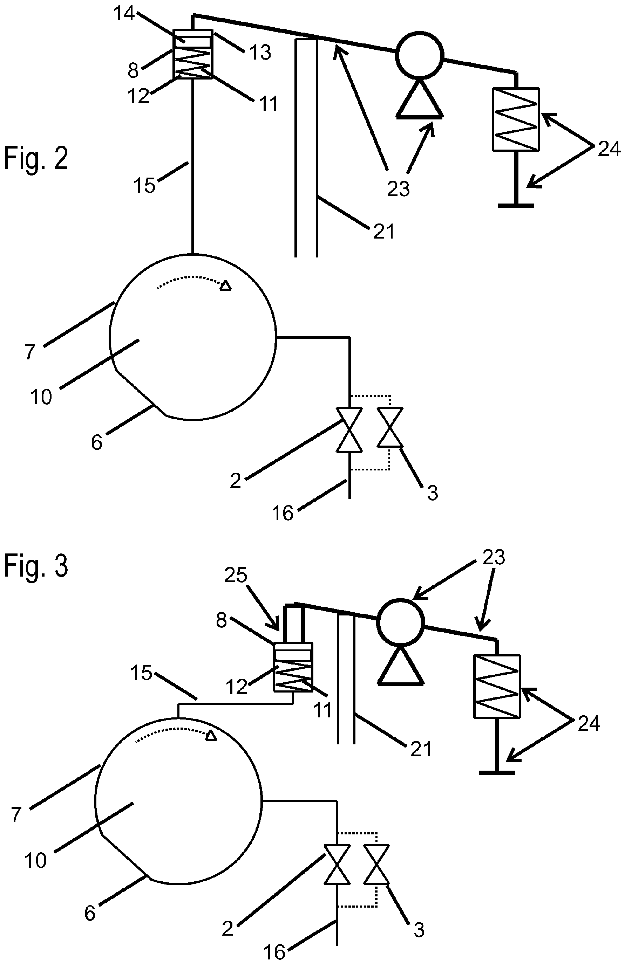

Die Figuren 2 bis 5 zeigen - in schematischer Darstellung - verschiedene Ausführungsformen eines Ventiltriebs 1. Der Ventiltrieb 1 ist geeignet für einen Gasaustausch in einem Verbrennungsmotor.

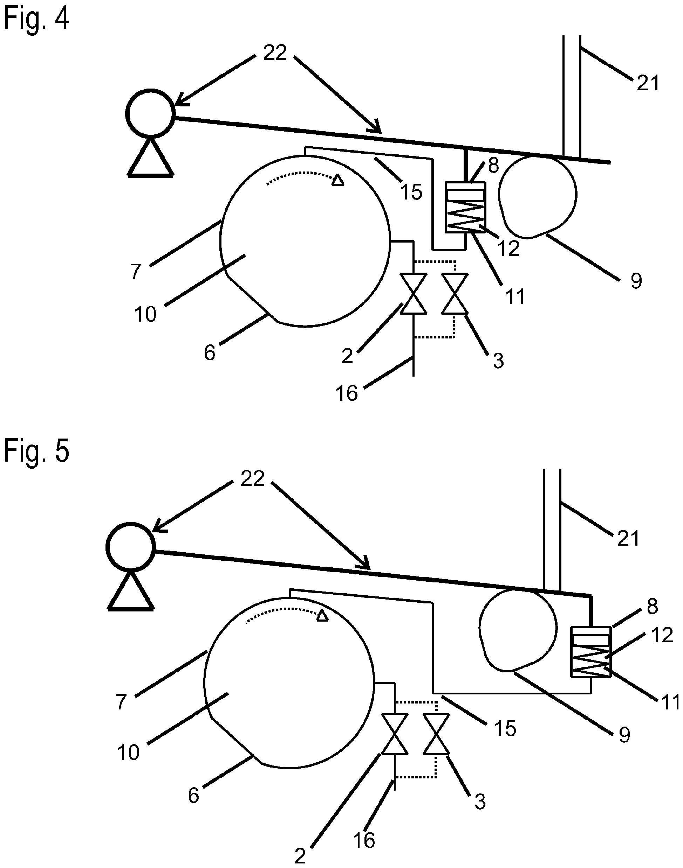

Figuren 4 und 5 zeigen einen Nockenwellen-seitigen Teil des Ventiltriebs (z.B. einen untenliegenden Teil des Ventiltriebs im Falle einer untenliegenden Nockenwelle), und Figuren 2 und 3 zeigen einen Ventilschaft-seitigen Teil des Ventiltriebs (z.B. einen obenliegenden Teil des Ventiltriebs). Diese Teile des Ventiltriebs können über eine in allen Figuren teilweise gezeigte Stößelstange 21 miteinander bzw. mit entsprechenden Teilen eines konventionellen Ventiltriebs (z.B. ohne das in den Figuren gezeigte Verzögerungselement 8 und ohne Hydraulik-Zufuhr) verbunden werden.

Der Ventiltrieb 1 weist einen Einlassventil-Betätigungsmechanismus 20 zur Betätigung eines Einlassventils 24 des Verbrennungsmotors auf. Die Betätigung des Einlassventils 24 des Verbrennungsmotors umfasst eine Öffnungsbewegung und eine Schließbewegung des Einlassventils 24. Der Einlassventil-Betätigungsmechanismus 20 weist eine kinematische Kette periodisch beweglicher Elemente zum periodischen Drücken auf einen Ventilschaft des Einlassventils auf. Durch das periodische Drücken wird eine Öffnungsbewegung betätigt, und durch die periodische Wegnahme des Drückens wird eine Schließbewegung betätigt. Die periodische Bewegung der Elemente des Einlassventil-Betätigungsmechanismus 20 kann beispielsweise durch eine Nockenwelle 9 erzeugt werden, wobei die übrigen Elemente die periodische Bewegung von der Nockenwelle auf den Ventilschaft übertragen.

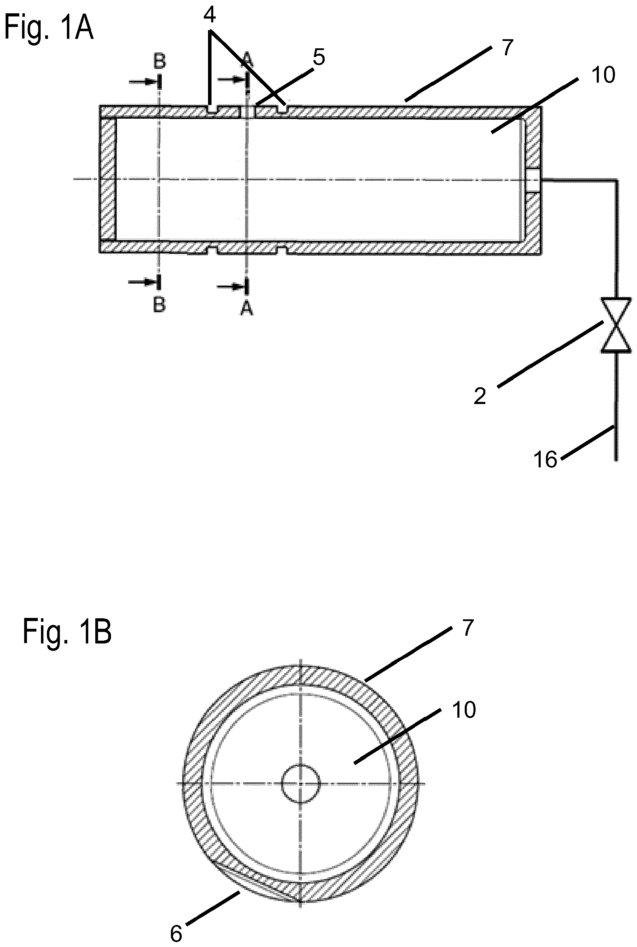

Der Einlassventil-Betätigungsmechanismus 20 kann (als bewegliche Elemente der oben genannten kinematischen Kette) beispielsweise einen Schlepphebel 22, einen Kipphebel 23, eine Stößelstange 21 und/oder eine Ventilbrücke aufweisen. Beispielsweise zeigen Figuren 2 und 3 schematisch einen Kipphebel 23, Figuren 4 und 5 einen Schlepphebel 22 und Figuren 1 bis 4 eine Stößelstange 21.

Der Ventiltrieb 1 weist ferner ein Verzögerungselement 8 auf. Das Verzögerungselement 8 befindet sich in Kontakt mit dem Einlassventil-Betätigungsmechanismus 20.

In einer Ausführungsform kann das Verzögerungselement 8 einen Hydraulikzylinder 13 und einen Hydraulikkolben 14 aufweisen. Ausführungsformen des Hydraulikzylinders 13 und des Hydraulikkolbens 14 sind beispielsweise in den Figuren 2 bis 5 illustriert. Das in die Hydraulikkammer 12 gespeiste Hydraulikmedium kann den Hydraulikkolben 14 beaufschlagen. Der Hydraulikkolben 14 kann dem Schließen des Einlassventil-Betätigungsmechanismus 20 entgegen wirken. Weiterhin kann das Verzögerungselement 8 eine Federeinrichtung 11 aufweisen, die entgegen der Schließbewegung des Einlassventil-Betätigungsmechanismus 20 wirken kann.

Der Kontakt des Verzögerungselements 8 mit dem Element des Einlassventil-Betätigungsmechanismus 20 ist insbesondere eine Kopplung des Elements mit dem Hydraulikkolben 14 derart, dass die Öffnungsbewegung des Elements den Kolben in Richtung aus der Hydraulikkammer 12 heraus bewegt (zieht) und die Schließbewegung des Elements den Kolben in Richtung in die Hydraulikkammer 12 hinein bewegt (drückt).

In einer Ausführungsform kann das Verzögerungselement 8 mechanisch mit dem Einlassventil-Betätigungsmechanismus 20 verbunden sein. In einer anderen Ausführungsform kann der Einlassventil-Betätigungsmechanismus 20 beim Betätigen, insbesondere beim Schließen, des Einlassventils 24 mit dem Verzögerungselement 8 in Kontakt treten.

Das Verzögerungselement 8 kann dabei mit jedem Element des Einlassventil-Betätigungsmechanismus 20 in Kontakt treten, das sich bei Betätigung des Einlassventils 24 bewegt. In einer Ausführungsform ist das Verzögerungselement 8 in Kontakt mit dem Schlepphebel 22. Die Figuren 4 und 5 zeigen Beispiele, in denen das Verzögerungselement 8 in Kontakt mit dem Schlepphebel 22 ist. In einer weiteren Ausführungsform ist das Verzögerungselement 8 in Kontakt mit dem Schlepphebel 22. Die Figuren 2 und 3 zeigen Beispiele, in denen das Verzögerungselement 8 in Kontakt mit dem Kipphebel 22 ist. Figur 3 illustriert eine Ausführungsform, wobei der Kipphebel eine zusätzliche Stößelstange 25 aufweist. In einer weiteren Ausführungsform ist das Verzögerungselement 8 in Kontakt mit der Ventilbrücke (nicht dargestellt). In einer weiteren Ausführungsform ist das Verzögerungselement 8 in Kontakt mit der Stößelstange 21 (nicht dargestellt).

Das Verzögerungselement 8 weist eine Hydraulikkammer 12 auf zum Verzögern einer Schließbewegung des Einlassventils 24 mittels eines Hydraulikmediums. Das Hydraulikmedium kann beispielsweise Motoröl sein oder ein separater Servoölkreislauf sein.

Vorteilhafterweise ermöglicht das Verzögerungselement 8 ein frühzeitiges Schließen des Einlassventils 24 zu verhindern. Wenn die Hydraulikkammer 12 kein Hydraulikmedium aufweist, erfolgt keine oder im Wesentlichen keine Verzögerung der Schließbewegung des Einlassventils 24. Dies kann insbesondere im Volllastbetrieb erwünscht sein. Beispielsweise im Teillastlastbetrieb kann eine Verzögerung der Schließbewegung des Einlassventils 24 erwünscht sein. Die Schließbewegung des Einlassventils 24 kann, bei Vorhandensein des Hydraulikmediums in der Hydraulikkammer 12, dadurch verzögert werden, dass der Einlassventil-Betätigungsmechanismus 20 das Hydraulikmedium aus der Hydraulikkammer 12 herauspresst oder herausdrückt. Durch den Einsatz des Ventiltriebs 1 gemäß einer der Ausführungsformen der vorliegenden Offenbarung können die negativen Auswirkungen des "Miller-Effektes" bzw. der Miller-Steuerzeiten, insbesondere im Leerlauf und im Teillastbetrieb, eliminiert werden.

Die Hydraulikkammer 12 kann als zur Aufnahme des Hydraulikmediums gebildeter Hydraulikzylinder ausgebildet sein. In der Hydraulikkammer 12 ist ein verschiebbarer Hydraulikkolben 14 angeordnet.

Weiterhin weist der Ventiltrieb 1 eine Hydraulik-Zufuhr zum Zuführen des Hydraulikmediums in die Hydraulikkammer 12 auf. Die Hydraulik-Zufuhr weist eine Steuerwelle 7 auf. Figur 1A zeigt eine Seitenansicht einer erfindungsgemäßen Steuerwelle 7 gemäß einer Ausführungsform. Figur 1B zeigt eine Querschnittsansicht der Steuerwelle 7 aus Figur 1A entlang der Linie B-B. Die Steuerwelle 7 kann einen Hohlraum 10 für das Hydraulikmedium aufweisen, insbesondere einen axial ausgedehnten Hohlraum 10. In einer Ausführungsform erstreckt sich der Hohlraum fast über die gesamte axiale Ausdehnung der Steuerwelle 7 (z. B. über mindestens 60% oder mindestens 80% der axialen Ausdehnung der Steuerwelle 7).

Die Hydraulik-Zufuhr kann eine Zufuhrleitung 16 aufweisen, die mit der Steuerwelle 7 verbunden sein kann, um das Hydraulikmedium dem axial ausgedehnten Hohlraum 10 zuzuführen. Insbesondere kann die Zufuhrleitung 16 eine Leitung zum Motor sein, wobei als Hydraulikmedium Motoröl verwendet werden kann.

Die Steuerwelle 7 kann mechanisch von dem Verbrennungsmotor angetrieben werden. Die Steuerwelle (7) wird bevorzugt synchron zu der periodischen Betätigung des Einlassventils angetrieben, also beispielsweise synchron zu einer Nockenwelle (9) des Verbrennungsmotors, insbesondere mit einer gleichen Drehzahl wie die Nockenwelle (9). Vorteilhafterweise ermöglicht ein zu der Nockenwelle 9 synchroner Antrieb der Steuerwelle 7 eine zu jeder Orientierung der Nockenwelle 9 entsprechende, definierte Orientierung der Steuerwelle 7 (wobei die entsprechende Orientierung der Steuerwelle 7 etwa über einen Phasenversteller verstellbar sein kann).

Die Steuerwelle 7 kann mindestens eine Öffnung 5 aufweisen. Bevorzugterweise erstreckt sich die Öffnung 5 nur über einen Abschnitt eines äußeren Umfangs der Steuerwelle 7. Insbesondere erstreckt sich die Öffnung 5 bevorzugterweise nicht über den gesamten äußeren Umfang der Steuerwelle 7.

Das Hydraulikmedium, das sich in dem axial ausgedehnten Hohlraum 10 befindet, kann über die Öffnung 5 aus der Steuerwelle 7 austreten. Insbesondere ermöglicht die Öffnung 5 das intermittierende Zuführen des Hydraulikmediums von dem axial ausgedehnten Hohlraum 10 der Steuerwelle hin zu der Hydraulikkammer 12 des Verzögerungselements 8.

Der Hohlraum 10 der Steuerwelle 7 kann dabei mit der Hydraulikkammer 12 des Verzögerungselements 8 über eine Verbindungsleitung 15 in fluide Verbindung gebracht werden. Das Verzögerungselement 8 kann eine Öffnung aufweisen um eine fluide Verbindung zwischen der Hydraulikkammer 12 des Verzögerungselements 8 und der Verbindungsleitung 15 zu ermöglichen. In einer Ausführungsform kann die Verbindungsleitung 15 starr mit der Steuerwelle 7, und somit nicht drehbar an der Steuerwelle 7, gelagert und/oder verbunden sein. Im Falle, dass sich die Öffnung 5 der Steuerwelle 7 nur über einen Abschnitt des äußeren Umfangs der Steuerwelle 7 erstreckt, erfolgt eine Zufuhr des Hydraulikmediums von dem Hohlraum 10 der Steuerwelle 7 zu der Hydraulikkammer 12 des Verzögerungselements 8 nur bei einer bestimmten Orientierung der Steuerwelle 7. Die fluide Verbindung zwischen Hohlraum 10 und Hydraulikkammer 12 kann vorhanden sein bei "Überlapp" der Öffnung 5 mit der Verbindungsleitung 15. Durch weitere Rotation der Steuerwelle 7, oder in anderen Worten falls kein Überlapp zwischen der Öffnung 5 der Steuerwelle 7 und der Verbindungsleitung 15 besteht, kann die fluide Verbindung von dem Hohlraum 10 zu der Hydraulikkammer 12 intermittierend unterbrochen werden. Gemäß einer Ausführungsform ist die Öffnung 5 der Steuerwelle 7 derart angeordnet, insbesondere die Orientierung der Steuerwelle 7 zu der Nockenwelle 9, dass ein intermittierendes Zuführen des Hydraulikmediums von dem Hohlraum 10 hin zu der Hydraulikkammer 12 vor oder bei Erreichen eines maximalen Ventilhubes des Einlassventils 24 ermöglicht wird.

Die Hydraulik-Zufuhr weist somit gemäß einem allgemeinen Aspekt eine von der Steuerwelle 7 zu der Hydraulikkammer 12 führende Verbindungsleitung 15 auf. Ein Eingang der Verbindungsleitung 15 ist in diesem Fall derart angeordnet, dass die Öffnung 5 der Steuerwelle 7 den Eingang der Verbindungsleitung 15 periodisch zum intermittierenden Zuführen des Hydraulikmediums von dem Hohlraum 10 überstreicht. Bei einem ersten Drehwinkel der Steuerwelle 7 kann etwa die Öffnung 5 der Steuerwelle 7 mit dem Eingang der Verbindungsleitung 15 überlappen, so dass das Hydraulikmedium über die Verbindungsleitung 15 zugeführt wird, und bei einem zweiten Drehwinkel der Steuerwelle 7 kann die Öffnung 5 der Steuerwelle 7 mit dem Eingang der Verbindungsleitung 15 nicht überlappen, so dass die Zufuhr des Hydraulikmediums unterbunden wird.

Der Ventiltrieb 1 kann ferner ein in der Zufuhrleitung 16 angeordnetes Schaltventil 2, insbesondere ein elektromagnetisches Schaltventil 2, aufweisen. Das Schaltventil 2 kann dazu eingerichtet sein die Zufuhrleitung 16 zu öffnen und zu schließen (Ausführungsformen hiervon sind in den Figuren illustriert). Insbesondere kann das Schaltventil 2 dazu eingerichtet sein im Teillastbetrieb die Zufuhrleitung 16 zu öffnen. Hierdurch kann ein intermittierendes Zuführen des Hydraulikmediums von dem Hohlraum 10 hin zu der Hydraulikkammer 12 vor Erreichen eines maximalen Ventilhubes des Einlassventils 24 ermöglicht werden. In einer Ausführungsform kann das Schaltventil 2 dazu eingerichtet sein die Zufuhrleitung 16 zu schließen, wenn der Verbrennungsmotor im Vollastbetrieb läuft und/oder nicht im Teillastbetrieb läuft.

Der Ventiltrieb 1 kann ferner dazu eingerichtet sein ein intermittierendes Ablassen des Hydraulikmediums aus der Hydraulikkammer 12 zu ermöglichen. In einer Ausführungsform kann die Hydraulik-Zufuhr, bevorzugt die Steuerwelle 7, dazu eingerichtet sein ein intermittierendes Ablassen des Hydraulikmediums aus der Hydraulikkammer 12 zu ermöglichen. Insbesondere kann die Steuerwelle 7 einen Ablaufschlitz 6 zum intermittierenden Ablassen des Hydraulikmediums von der Hydraulikkammer 12 des Verzögerungselements 8 hin zu dem Ablaufschlitz 6 aufweisen. Insbesondere kann eine fluide Verbindung von der Hydraulikkammer 12 hin zu dem Ablaufschlitz 6 bei Drehung der Steuerwelle 7 intermittierend geöffnet und unterbrochen werden.

Ausführungsformen des Ablaufschlitzes 6 sind beispielsweise in den Figuren 1B, 2, 3, 4 und 5 illustriert. In einer Ausführungsform ist der Ablaufschlitz 6 an dem äußeren Umfang der Steuerwelle 7 angeordnet. Der Ablaufschlitz 6 kann sich über einen Abschnitt des äußeren Umfangs der Steuerwelle 7 erstrecken. Insbesondere erstreckt sich Ablaufschlitz 6 bevorzugterweise nicht über den gesamten äußeren Umfang der Steuerwelle 7.

Der Ablaufschlitz 6 der Steuerwelle 7 kann sich radial über einen Abschnitt der Steuerwelle 7 erstrecken. Insbesondere entspricht der Ablaufschlitz 6 der Steuerwelle 7 bevorzugt nicht einer Öffnung und/oder ist bevorzugt im Wesentlichen nicht in fluider Verbindung mit dem axial ausgedehnten Hohlraum 10 der Steuerwelle 7. Der Ablaufschlitz 6 der Steuerwelle 7 kann sich axial über einen Abschnitt der Steuerwelle 7 erstrecken. Insbesondere erstreckt sich der Ablaufschlitz 6 axial bevorzugt lediglich über einen Abschnitt der Steuerwelle 7.

In einer Ausführungsform ist der Ablaufschlitz 6 der Steuerwelle 7 axial versetzt von der Öffnung 5 der Steuerwelle 7 angeordnet. Beispielsweise illustriert Figur 1A eine Ausführungsform der Steuerwelle 7 bei der die Öffnung 5 der Steuerwelle 7 axial im Bereich der Linie A-A angeordnet ist, während der Ablaufschlitz 6 der Steuerwelle 7 axial im Bereich der Linie B-B angeordnet ist.

Der axial ausgedehnte Hohlraum 10 der Steuerwelle 7 und der Ablaufschlitz 6 der Steuerwelle 7 stehen bevorzugt im Wesentlichen nicht in fluider Verbindung miteinander. Gemäß einer Ausführungsform kann die Steuerwelle 7 im Bereich der Öffnung 5 eine Abdichtung aufweisen um ein Austreten des Hydraulikmediums im Bereich der Öffnung 5 der Steuerwelle 7 zu vermeiden. Insbesondere kann die Steuerwelle 7 ein Abdichtungselement, wie beispielsweise Nutenkolbenringe 4 (eine beispielhafte Ausführungsform hiervon ist in Figur 1A illustriert) oder O-Ringe, aufweisen um ein Austreten des Hydraulikmediums im Bereich der Öffnung 5 der Steuerwelle 7 zu vermeiden. Hierdurch kann insbesondere eine fluide Verbindung zwischen der Öffnung 5 und dem Ablaufschlitz 6 im Wesentlichen vermieden werden.

Der Ablaufschlitz 6 der Steuerwelle 7 kann mit der Hydraulikkammer 12 des Verzögerungselements 8 in fluide Verbindung gebracht werden. In einer Ausführungsform kann der Ablaufschlitz 6 der Steuerwelle 7 über die Verbindungsleitung 15 mit der Hydraulikkammer 12 des Verzögerungselements 8 in fluide Verbindung gebracht werden. Beispielsweise kann sich die Verbindungsleitung 15 gabeln und somit mit dem Hohlraum 10 der Steuerwelle 7, dem Ablaufschlitz 6 der Steuerwelle 7 und der Hydraulikkammer 12 des Verzögerungselements 8 in verbunden sein. In einer weiteren Ausführungsform weist das Verzögerungselement 8 eine zweite Öffnung auf um eine fluide Verbindung zwischen der Hydraulikkammer 12 des Verzögerungselements 8 und dem Ablaufschlitz 6 der Steuerwelle 7 zu ermöglichen. Der Ventiltrieb 1 kann eine die Hydraulikkammer 12 des Verzögerungselements 8 und den Ablaufschlitz 6 der Steuerwelle 7 verbindende zweite Verbindungsleitung aufweisen.

In einer Ausführungsform können die Verbindungsleitung 15 und/oder die zweite Verbindungsleitung starr mit der Steuerwelle, und somit nicht drehbar an der Steuerwelle, gelagert und/oder verbunden sein. Im Falle, dass sich der Ablaufschlitz 6 der Steuerwelle 7 nur über einen Abschnitt des äußeren Umfangs der Steuerwelle 7 erstreckt, erfolgt ein Ablassen des Hydraulikmediums von der Hydraulikkammer 12 des Verzögerungselements 8 zu dem Ablaufschlitz 6 der Steuerwelle 7 nur bei einer bestimmten Orientierung der Steuerwelle 7. Die fluide Verbindung zwischen Hohlraum 10 und Hydraulikkammer 12 kann vorhanden sein bei Überlapp des Ablaufschlitzes 6 mit der Verbindungsleitung 15 oder der zweiten Verbindungsleitung. Durch weitere Rotation der Steuerwelle 7, oder in anderen Worten falls kein Überlapp zwischen dem Ablaufschlitz 6 und der Verbindungsleitung 15 oder der zweiten Verbindungsleitung besteht, kann die fluide Verbindung von der Hydraulikkammer 12 zu dem Ablaufschlitz 6 intermittierend unterbrochen werden. Gemäß einer Ausführungsform ist der Ablaufschlitz 6 der Steuerwelle 7 derart angeordnet, insbesondere die Orientierung der Steuerwelle 7 zu der Nockenwelle 9, dass ein intermittierendes Ablassen des Hydraulikmediums von der Hydraulikkammer 12 hin zu dem Ablaufschlitz 6 nach Erreichen einer maximalen Öffnung des Einlassventils 24 ermöglicht wird.

Der Ventiltrieb 1 gemäß Ausführungsformen der vorliegenden Offenbarung ermöglicht die Verzögerung der Schließbewegung des Einlassventils basierend auf einer mechanischen Lösung. Insbesondere erfordert der Ventiltrieb 1 gemäß Ausführungsformen der vorliegenden Offenbarung keine elektrischen und/oder elektromagnetischen Bauteile zum Verzögern der Schließbewegung des Einlassventils. Elektrische und/oder elektromagnetische Bauteile können zu einem erheblichen Mehraufwand führen, insbesondere im Zusammenhang mit einer Steuerung und einer möglichen Kalibrierung der Schließbewegung des Einlassventils.

Figuren 2 und 3 illustrieren jeweils Ventiltriebe 1 gemäß einer Ausführungsform. Das Verzögerungselement 8 ist hierbei in Kontakt mit dem Kipphebel 23 des Einlassventil-Betätigungsmechanismus 20. Die Stößelstange 21 ist in den Figuren 2 und 3 nur teilweise dargestellt. Der gestrichelte Pfeil deutet eine Rotationsrichtung der Steuerwelle 7 an, welche nicht einschränkend zu sehen ist. Die Steuerwelle 7 kann alternativ gegen den Uhrzeigersinn rotieren. Die Verzögerung der Schließbewegung des Einlassventils 24 kann bei den beiden in den Figuren 2 und 3 dargestellten Ausführungsformen erreicht werden, in dem das mit dem Hydraulikmedium befüllte Verzögerungselement 8 die Bewegung des Kipphebels 23 verzögern kann und daraus resultierend auch die Schließbewegung des Einlassventils 24.

Figuren 4 und 5 illustrieren jeweils Ventiltriebe 1 gemäß einer Ausführungsform. Das Verzögerungselement 8 ist hierbei in Kontakt mit dem Schlepphebel 22 des Einlassventil-Betätigungsmechanismus 20. Die Stößelstange 21 ist nur teilweise dargestellt. Die Verzögerung der Schließbewegung des Einlassventils 24 kann bei den beiden in den Figuren 4 und 5 dargestellten Ausführungsformen erreicht werden, in dem das mit dem Hydraulikmedium befüllte Verzögerungselement 8 die Bewegung des Schlepphebels 22 verzögern kann und daraus resultierend auch die Schließbewegung des Einlassventils 24.

Gemäß einer Ausführungsform kann der Ventiltrieb 1 einen Antriebsstrang für das Schaltventil 2 aufweisen. Der Antriebsstrang kann einen Phasenversteller zur Variation eines Schließzeitpunkts der Zufuhrleitung 16 aufweisen, wobei die Variation vorzugsweise drehzahl- und/oder lastabhängig erfolgt. In einer anderen Ausführungsform kann der Phasenversteller die Orientierung der Steuerwelle 7 relativ zu der Nockenwelle 9 verändern. Der Phasenversteller ermöglicht es somit einen Zeitpunkt der intermittierenden Zufuhr des Hydraulikmediums zu der Hydraulikkammer 12 zu verändern.

Gemäß einer Ausführungsform kann der Ventiltrieb 1 ein Bypassventil 3 zum Umgehen des Schaltventils 2 aufweisen, wobei durch, vorzugsweise mechanische oder elektrische, Betätigung des Bypassventils 3 das Zuführen des Hydraulikmediums in den axial ausgedehnten Hohlraum 10 der Steuerwelle 7 ermöglicht wird. Das Bypassventil 3 ermöglicht einen Fail-Safe Betrieb.

Gemäß einer Ausführungsform wird ein Verbrennungsmotor bereitgestellt. Der Verbrennungsmotor kann eine Vielzahl von Ventiltrieben 1 nach einem der hierin offenbarten Ausführungsformen aufweisen. Insbesondere kann eine fluide Verbindung von der Steuerwelle 7 hin zu den Hydraulikkammern 12 aller Verzögerungselemente 8 bei Drehung der Steuerwelle intermittierend geöffnet und unterbrochen werden.

Die Steuerwelle 7 kann dabei eine Vielzahl an Öffnungen 5 und/oder eine Vielzahl von Ablaufschlitzen 6 aufweisen. Vorteilhafterweise ermöglichen die hierin offenbarten Ventiltriebe 1 und die Verbrennungsmotoren die Zufuhr des Hydraulikmediums von der Hydraulik-Zufuhr, bevorzugt der Steuerwelle 7, hin zu den Hydraulikkammern 12 aller Verzögerungselemente 8 und das Ablassen des Hydraulikmediums von den Hydraulikkammern 12 aller Verzögerungselemente 8 hin zu der Hydraulik-Zufuhr, bevorzugt der Steuerwelle 7. Somit wird eine Verzögerung der Schließbewegung der Einlassventile aller Ventiltriebe 1 durch die Steuerwelle 7 ermöglicht. Vorteilhafterweise werden zur Verzögerung der Schließbewegung der Einlassventile 24 keine individuellen elektrischen oder elektromagnetischen Ansteuerungen oder separaten Vorrichtungen für jeden Ventiltrieb 1 benötigt, wie beispielsweise einen Hydraulikmedium-Servokreislauf pro Ventiltrieb des Verbrennungsmotors. Stattdessen kann erfindungsgemäß die Steuerwelle 7 alle Hydraulikkammern 12 des Verbrennungsmotors mit dem Hydraulikmedium versorgen, ohne elektrische und/oder elektromagnetische Bauteile zum Verteilen des Hydraulikmediums zu erfordern. Vorteilhafterweise liegt somit eine einfache und kostengünstige Konstruktion vor, wobei gleichzeitig eine sichere und akkurate Ansteuerung der Verzögerungselemente 8 gewährleistet ist und der Leistungsbedarf verringert ist.

Insbesondere ermöglicht das in der Zufuhrleitung 16 angeordnete Schaltventil 2 das Zuführen des Hydraulikmediums von dem Hohlraum 10 der Steuerwelle 7 in die Hydraulikkammern 12 aller Verzögerungselemente 8.

## Patentansprüche

1. Ventiltrieb (1) für einen Verbrennungsmotor, der Ventiltrieb aufweisend:
einen Einlassventil-Betätigungsmechanismus (20) zur periodischen Betätigung eines Einlassventils (24) des Verbrennungsmotors;
ein mit dem Einlassventil-Betätigungsmechanismus (20) in Kontakt befindliches Verzögerungselement (8) mit einer Hydraulikkammer (12) zum Verzögern einer Schließbewegung des Einlassventils (24) mittels eines Hydraulikmediums;
eine Hydraulik-Zufuhr zum Zuführen des Hydraulikmediums in die Hydraulikkammer (12),
wobei die Hydraulik-Zufuhr eine Steuerwelle (7) aufweist, wobei die Steuerwelle (7) von dem Verbrennungsmotor mechanisch angetrieben wird, bevorzugt synchron zu der periodischen Betätigung des Einlassventils (24) angetrieben wird; und **dadurch gekennzeichnet, dass**
die Steuerwelle (7) einen axial ausgedehnten Hohlraum (10) für das Hydraulikmedium, und mindestens eine Öffnung (5) zum intermittierenden Zuführen des Hydraulikmediums von dem Hohlraum (10) hin zu der Hydraulikkammer (12) aufweist.

2. Ventiltrieb nach Anspruch 1, wobei der Einlassventil-Betätigungsmechanismus (20)
a. einen Kipphebel (23) aufweist, wobei das Verzögerungselement (8) in Kontakt mit dem Kipphebel (23) ist; und/oder
b. einen Schlepphebel (22) aufweist, wobei das Verzögerungselement (8) in Kontakt mit dem Schlepphebel (22) ist; und/oder
c. eine Stößelstange (21) aufweist, wobei das Verzögerungselement (8) in Kontakt mit der Stößelstange (21) ist; und/oder
d. eine Ventilbrücke aufweist, wobei das Verzögerungselement (8) in Kontakt mit der Ventilbrücke ist.

3. Ventiltrieb nach einem der vorherigen Ansprüche, wobei die Hydraulik-Zufuhr eine mit der Steuerwelle (7) verbundene Zufuhrleitung (16) aufweist zum Zuführen des Hydraulikmediums in den axial ausgedehnten Hohlraum (10), wobei das Hydraulikmedium bevorzugterweise Motoröl ist.

4. Ventiltrieb nach Anspruch 3, weiterhin aufweisend ein in der Zufuhrleitung (16) angeordnetes Schaltventil (2), bevorzugterweise ein elektromagnetisches Schaltventil (2).

5. Ventiltrieb nach einem der vorherigen Ansprüche, wobei der Hohlraum (10) der Steuerwelle (7) mit der Hydraulikkammer (12) des Verzögerungselements (8) über eine Verbindungsleitung (15) in fluider Verbindung gebracht werden kann.

6. Ventiltrieb nach einem der vorherigen Ansprüche, wobei die Öffnung (5) der Steuerwelle (7), insbesondere eine Orientierung der Öffnung der Steuerwelle (7) zu einer Nockenwelle (9), derart angeordnet ist, dass ein intermittierendes Zuführen des Hydraulikmediums von dem Hohlraum (10) hin zu der Hydraulikkammer (12) vor oder bei Erreichen eines maximalen Ventilhubes des Einlassventils (24) ermöglicht wird.

7. Ventiltrieb nach einem der vorherigen Ansprüche, wobei die Hydraulikkammer (12) als Hydraulikzylinder ausgebildet ist und das Verzögerungselement (8) weiter einen Hydraulikkolben (14) aufweist, wobei der Hydraulikkolben (14) in der Hydraulikkammer (12) verschiebbar angeordnet ist, um mit dem in die Hydraulikkammer (12) gespeisten Hydraulikmedium beaufschlagt zu werden derart, dass der mit dem Hydraulikmedium beaufschlagte Hydraulikkolben (14) der Schließbewegung des Einlassventil-Betätigungsmechanismus (20) entgegen wirkt.

8. Ventiltrieb nach einem der vorherigen Ansprüche, wobei die Steuerwelle (7) einen Ablaufschlitz (6) zum intermittierenden Ablassen des Hydraulikmediums von der Hydraulikkammer (12) hin zu dem Ablaufschlitz (6) und durch den Ablaufschlitz (6) hindurch aufweist,
wobei bevorzugt der Ablaufschlitz (6) an einem äußeren Umfang der Steuerwelle (7) angeordnet ist.

9. Ventiltrieb nach einem der vorherigen Ansprüche, wobei der Ablaufschlitz (6) der Steuerwelle (7), insbesondere eine Orientierung des Ablaufschlitzes (6) der Steuerwelle (7) zu der Nockenwelle (9), derart angeordnet ist, dass ein intermittierendes Ablassen des Hydraulikmediums von der Hydraulikkammer (12) hin zu dem Ablaufschlitz (6) nach Erreichen einer maximalen Öffnung des Einlassventils (24) ermöglicht wird.

10. Ventiltrieb nach Anspruch 8, wobei der Ablaufschlitz (6) der Steuerwelle (7) sich radial über einen Abschnitt der Steuerwelle (7) erstreckt und/oder der axial ausgedehnte Hohlraum (10) der Steuerwelle (7) und der Ablaufschlitz (6) der Steuerwelle (7) nicht in direkter fluider Verbindung miteinander stehen.

11. Ventiltrieb nach einem der vorherigen Ansprüche, wobei das Verzögerungselement (8) eine Federeinrichtung (11) aufweist, die entgegen der Schließbewegung des Einlassventil-Betätigungsmechanismus (20) wirkt.

12. Ventiltrieb nach einem der vorherigen Ansprüche, ferner aufweisend ein Bypassventil (3) zum Umgehen des Schaltventils (2), wobei durch, vorzugsweise mechanische oder elektrische, Betätigung das Zuführen des Hydraulikmediums in den axial ausgedehnten Hohlraum (10) der Steuerwelle (7) ermöglicht wird.

13. Ventiltrieb nach einem der vorherigen Ansprüche, wobei der Ablaufschlitz (6) der Steuerwelle (7) axial versetzt von der Öffnung (5) der Steuerwelle (7) angeordnet ist.

14. Ventiltrieb nach einem der vorherigen Ansprüche, wobei der Ventiltrieb aufweist:
eine Vielzahl von Einlassventil-Betätigungsmechanismen (20) zur periodischen Betätigung einer entsprechenden Vielzahl von Einlassventilen (24) des Verbrennungsmotors;
eine Vielzahl von mit jeweiligen der Einlassventil-Betätigungsmechanismen (20) in Kontakt befindlichen Verzögerungselementen (8) mit jeweiligen Hydraulikkammern (12) zum Verzögern einer Schließbewegung des jeweiligen Einlassventils (24) mittels eines Hydraulikmediums,
wobei die Hydraulik-Zufuhr eine Steuerwelle (7) aufweist, wobei die Steuerwelle (7) von dem Verbrennungsmotor mechanisch angetrieben wird, bevorzugt synchron zu der periodischen Betätigung des Einlassventils (24) angetrieben wird; und
wobei die Steuerwelle (7) einen axial ausgedehnten Hohlraum (10) für das Hydraulikmedium, und jeweilige Öffnungen (5) zum intermittierenden Zuführen des Hydraulikmediums von dem Hohlraum (10) hin zu jeweiligen der Hydraulikkammern (12) aufweist, derart, dass eine fluide Verbindung von der Steuerwelle (7) hin zu den Hydraulikkammern (12) der jeweiligen Verzögerungselemente (8) bei Drehung der Steuerwelle (7) intermittierend geöffnet und unterbrochen wird.

15. Verbrennungsmotor, aufweisend zumindest einen Ventiltrieb nach einem der Ansprüche 1 bis 14.

## Claims

1. Valve train (1) for an internal combustion engine, the valve train having:
an inlet valve actuation mechanism (20) for the periodic actuation of an inlet valve (24) of the internal combustion engine;
a delay element (8), which is in contact with the inlet valve actuation mechanism (20) and which has a hydraulic chamber (12), for delaying a closing movement of the inlet valve (24) by means of a hydraulic medium;
a hydraulic feed for feeding the hydraulic medium into the hydraulic chamber (12),
wherein the hydraulic feed has a control shaft (7), wherein the control shaft (7) is mechanically driven by the internal combustion engine, preferably driven synchronously with the periodic actuation of the inlet valve (24); and **characterized in that** the control shaft (7) has an axially extended cavity (10) for the hydraulic medium, and at least one opening (5) for intermittently feeding the hydraulic medium from the cavity (10) to the hydraulic chamber (12) .

2. Valve train according to Claim 1, wherein the inlet valve actuation mechanism (20)
a. has a rocker arm (23), wherein the delay element (8) is in contact with the rocker arm (23); and/or
b. has a finger follower (22), wherein the delay element (8) is in contact with the finger follower (22); and/or
c. has a pushrod (21), wherein the delay element (8) is in contact with the pushrod (21); and/or
d. has a valve bridge, wherein the delay element (8) is in contact with the valve bridge.

3. Valve train according to either one of the preceding claims, wherein the hydraulic feed has a feed line (16), connected to the control shaft (7), for feeding the hydraulic medium into the axially extended cavity (10), wherein the hydraulic medium is preferably engine oil.

4. Valve train according to Claim 3, furthermore having a switching valve (2), preferably an electromagnetic switching valve (2), arranged in the feed line (16).

5. Valve train according to any one of the preceding claims, wherein the cavity (10) of the control shaft (7) can be brought into fluid communication with the hydraulic chamber (12) of the delay element (8) via a connecting line (15).

6. Valve train according to any one of the preceding claims, wherein the opening (5) of the control shaft (7), in particular an orientation of the opening of the control shaft (7) with respect to a camshaft (9), is arranged in such a way that intermittent feeding of the hydraulic medium from the cavity (10) to the hydraulic chamber (12) before or upon reaching a maximum valve lift of the inlet valve (24) is made possible.

7. Valve train according to any one of the preceding claims, wherein the hydraulic chamber (12) is designed as a hydraulic cylinder, and the delay element (8) furthermore has a hydraulic piston (14), wherein the hydraulic piston (14) is arranged movably in the hydraulic chamber (12) to enable it to be acted upon in such a way by the hydraulic medium fed into the hydraulic chamber (12) that the hydraulic piston (14) acted upon by the hydraulic medium counteracts the closing movement of the inlet valve actuation mechanism (20).

8. Valve train according to any one of the preceding claims, wherein the control shaft (7) has a drain slot (6) for the intermittent discharge of the hydraulic medium from the hydraulic chamber (12) to the drain slot (6) and through the drain slot (6), wherein the drain slot (6) is preferably arranged on an outer circumference of the control shaft (7).

9. Valve train according to any one of the preceding claims, wherein the drain slot (6) of the control shaft (7), in particular an orientation of the drain slot (6) of the control shaft (7) with respect to the camshaft (9), is arranged in such a way that intermittent discharge of the hydraulic medium from the hydraulic chamber (12) to the drain slot (6) after a maximum opening of the inlet valve (24) has been reached is made possible.

10. Valve train according to Claim 8, wherein the drain slot (6) of the control shaft (7) extends radially over a portion of the control shaft (7), and/or the axially extended cavity (10) of the control shaft (7) and the drain slot (6) of the control shaft (7) are not in direct fluid communication with one another.

11. Valve train according to any one of the preceding claims, wherein the delay element (8) has a spring device (11) which counteracts the closing movement of the inlet valve actuation mechanism (20).

12. Valve train according to any one of the preceding claims, furthermore having a bypass valve (3) for bypassing the switching valve (2), wherein the feeding of the hydraulic medium into the axially extended cavity (10) of the control shaft (7) is made possible by actuation, preferably mechanical or electric actuation.

13. Valve train according to any one of the preceding claims, wherein the drain slot (6) of the control shaft (7) is arranged axially offset from the opening (5) of the control shaft (7).

14. Valve train according to any one of the preceding claims, wherein the valve train has:
a multiplicity of inlet valve actuation mechanisms (20) for the periodic actuation of a corresponding multiplicity of inlet valves (24) of the internal combustion engine;
a multiplicity of delay elements (8), which are in contact with respective inlet valve actuation mechanisms (20) and which have respective hydraulic chambers (12), for delaying a closing movement of the respective inlet valve (24) by means of a hydraulic medium,
wherein the hydraulic feed has a control shaft (7), wherein the control shaft (7) is mechanically driven by the internal combustion engine, preferably driven synchronously with the periodic actuation of the inlet valve (24); and
wherein the control shaft (7) has an axially extended cavity (10) for the hydraulic medium, and respective openings (5) for intermittently feeding the hydraulic medium from the cavity (10) to the respective hydraulic chambers (12), such that a fluid connection from the control shaft (7) to the hydraulic chambers (12) of the respective delay elements (8) is intermittently opened and shut off during rotation of the control shaft (7).

15. Internal combustion engine having at least one valve train according to any one of Claims 1 to 14.

## Revendications

1. Entraînement de soupape (1) destiné à un moteur à combustion interne, l'entraînement de soupape comportant :
un mécanisme d'actionnement de soupape d'admission (20) destiné à actionner périodiquement une soupape d'admission (24) du moteur à combustion interne ;
un élément à retard (8), placé en contact avec le mécanisme d'actionnement de soupape d'admission (20), comportant une chambre hydraulique (12) et destiné à retarder un mouvement de fermeture de la soupape d'admission (24) au moyen d'un milieu hydraulique ;
une alimentation hydraulique destinée à amener le milieu hydraulique dans la chambre hydraulique (12),
l'alimentation hydraulique comportant un arbre de commande (7), l'arbre de commande (7) étant entraîné mécaniquement par le moteur à combustion interne, de préférence étant entraîné de manière synchrone avec l'actionnement périodique de la soupape d'admission (24) ; et **caractérisé en ce que**
l'arbre de commande (7) comporte une cavité (10) allongée axialement et destinée au milieu hydraulique, et au moins une ouverture (5) destinée à amener de manière intermittente le milieu hydraulique de la cavité (10) à la chambre hydraulique (12).

2. Entraînement de soupape selon la revendication 1, le mécanisme d'actionnement de soupape d'admission (20) comportant
a. un culbuteur mono-bras (23), l'élément à retard (8) étant en contact avec le levier mono-bras (23) ; et/ou
b. un culbuteur bi-bras (22), l'élément à retard (8) étant en contact avec le culbuteur bi-bras (22) ; et/ou
c. une barre de poussée (21), l'élément à retard (8) étant en contact avec la barre de poussée (21) ; et ou
d. un pont de soupape, l'élément à retard (8) étant en contact avec le pont de soupape.

3. Entraînement de soupape selon l'une des revendications précédentes, l'alimentation hydraulique comportant une conduite d'alimentation (16) reliée à l'arbre de commande (7) et destinée à amener le milieu hydraulique dans la cavité (10) allongée axialement, le milieu hydraulique étant de préférence de l'huile de moteur.

4. Soupape d'entraînement selon la revendication 3, comprenant en outre une soupape de commutation (2) disposée dans la conduite d'alimentation (16), de préférence une soupape de commutation électromagnétique (2) .

5. Soupape d'entraînement selon l'une des revendications précédentes, la cavité (10) de l'arbre de commande (7) pouvant être mise en communication fluidique avec la chambre hydraulique (12) de l'élément à retard (8) par le biais d'une conduite de liaison (15) .

6. Entraînement de soupape selon l'une des revendications précédentes, l'ouverture (5) de l'arbre de commande (7), notamment une orientation de l'ouverture de l'arbre de commande (7) vers un arbre à cames (9), étant disposée de manière à pouvoir amener de manière intermittente le milieu hydraulique de la cavité (10) vers la chambre hydraulique (12) avant ou au moment d'atteindre une course maximale de la soupape d'admission (24).

7. Entraînement de soupape selon l'une des revendications précédentes, la chambre hydraulique (12) étant conçue comme un vérin hydraulique et l'élément à retard (8) comprenant en outre un piston hydraulique (14), le piston hydraulique (14) étant disposé de manière à pouvoir coulisser dans la chambre hydraulique (12) afin d'être soumis au milieu hydraulique introduit dans la chambre hydraulique (12) de telle sorte que le piston hydraulique (14) soumis au milieu hydraulique s'oppose au mouvement de fermeture du mécanisme d'actionnement de soupape d'admission (20).

8. Entraînement de soupape selon l'une des revendications précédentes, l'arbre de commande (7) comportant une fente d'évacuation (6) destinée à évacuer de manière intermittente le milieu hydraulique de la chambre hydraulique (12) vers la fente de vidange (6) et par la fente d'évacuation (6),
la fente d'évacuation (6) étant de préférence ménagée sur une circonférence extérieure de l'arbre de commande (7) .

9. Entraînement de soupape selon l'une des revendications précédentes, la fente d'évacuation (6) de l'arbre de commande (7), notamment une orientation de la fente d'évacuation (6) de l'arbre de commande (7) vers l'arbre à cames (9), étant disposée de façon à pouvoir évacuer de manière intermittente le milieu hydraulique de la chambre hydraulique (12) vers la fente d'évacuation (6) après qu'une ouverture maximale de la soupape d'admission (24) a été atteinte.

10. Soupape d'entraînement selon la revendication 8, la fente d'évacuation (6) de l'arbre de commande (7) s'étendant radialement sur une portion de l'arbre de commande (7) et/ou la cavité (10) allongée axialement de l'arbre de commande (7) et la fente d'évacuation (6) de l'arbre de commande (7) ne sont pas en communication fluidique directe l'une avec l'autre.

11. Entraînement de soupape selon l'une des revendications précédentes, l'élément à retard (8) comportant un dispositif à ressort (11) qui s'oppose au mouvement de fermeture du mécanisme d'actionnement de soupape d'admission (20).

12. Entraînement de soupape selon l'une des revendications précédentes, comprenant en outre une soupape de dérivation (3) destinée à contourner la soupape de commutation (2), l'amenée du milieu hydraulique dans la cavité (10) allongée axialement de l'arbre de commande (7) pouvant être effectuée par actionnement, de préférence mécanique ou électrique.

13. Entraînement de soupape selon l'une des revendications précédentes, la fente d'évacuation (6) de l'arbre de commande (7) étant disposée en étant décalée axialement par rapport à l'ouverture (5) de l'arbre de commande (7).

14. Entraînement de soupapes selon l'une des revendications précédentes, l'entraînement de soupape comprenant :
une pluralité de mécanismes d'actionnement de soupape d'admission (20) destinés à actionner périodiquement une multitude correspondante de soupapes d'admission (24) du moteur à combustion interne ;
une multitude d'éléments à retard (8) placés en contact avec des mécanismes d'actionnement de soupape d'admission respectifs (20) et comportant des chambres hydrauliques respectives (12) destinées à retarder un mouvement de fermeture de la soupape d'admission respective (24) au moyen d'un milieu hydraulique,
l'alimentation hydraulique comportant un arbre de commande (7), l'arbre de commande (7) étant entraîné mécaniquement par le moteur à combustion interne, de préférence étant entraîné de manière synchrone avec l'actionnement périodique de la soupape d'admission (24) ; et
l'arbre de commande (7) comportant une cavité (10) allongée axialement destinée au milieu hydraulique, et des ouvertures respectives (5) destinées à amener de manière intermittente le milieu hydraulique de la cavité (10) à une chambre respective des chambres hydrauliques (12) de sorte qu'une liaison fluidique de l'arbre de commande (7) aux chambres hydrauliques (12) des éléments à retard respectifs (8) soit ouverte et interrompue de manière intermittente lorsque l'arbre de commande (7) est en rotation.

15. Moteur à combustion interne, comportant au moins un entraînement de soupape selon l'une des revendications 1 à 14.
